Europäisches Patentamt

European Patent Office

Office européen des brevets

(11) Veröffentlichungsnummer: **0 058 310**
**B1**

# (12) EUROPÄISCHE PATENTSCHRIFT

(45) Veröffentlichungstag der Patentschrift:
14.03.84

(51) Int. Cl.³: **B 01 D 45/08**

(21) Anmeldenummer: **82100425.6**

(22) Anmeldetag: **22.01.82**

(54) Prallabscheider für staubbeladene Gase.

(30) Priorität: 17.02.81  DE 3105676

(43) Veröffentlichungstag der Anmeldung:
25.08.82 Patentblatt 82/34

(45) Bekanntmachung des Hinweises auf die Patenterteilung:
14.03.84 Patentblatt 84/11

(84) Benannte Vertragsstaaten:
AT BE DE FR GB IT LU NL SE

(56) Entgegenhaltungen:
US - A - 3 181 287

(73) Patentinhaber: Krupp-Koppers GmbH, Moltkestrasse 29,
D-4300 Essen 1 (DE)

(72) Erfinder: Polenz, Joachim, Dipl.-Ing.,
Weissenburgstrasse 9/11, D-4300 Essen 1 (DE)
Erfinder: Heinrichs, Bernhard, Am Mühlenteich 5,
D-4640 Wattenscheid (DE)

BUNDESDRUCKEREI BERLIN

## Prallabscheider für staubbeladene Gase

Die Erfindung betrifft einen Prallabscheider für staubbeladene Gase mit einer von den Gasen angeströmten und diese ablenkenden Prallplatte.

Diese Prallplatte unterliegt einem starken Verschleiß durch die auftreffenden Staubteilchen, beispielsweise Koksteilchen, wenn es sich bei den zu entstaubenden Gasen um Kühlgase aus einer Kokstrockenkühlanlage handelt. Der Verschleiß führt daher zwangsläufig zu häufigen Reparaturen, die bei Prallabscheidern bisheriger Bauarten längere Stillstände der Gesamtanlage bedingten.

Der Erfindung liegt daher die Aufgabe zugrunde, den Prallabscheider so auszubilden, daß die Stillstandzeiten zwecks Prallplattenreparatur wesentlich verringert werden oder auch ganz entfallen können.

Zur Lösung dieser Aufgabe sieht die Erfindung vor, daß die Prallplatte aus mehreren Einzelteilen zusammengesetzt ist, die einzeln auswechselbar sind.

Gemäß einer bevorzugten Ausführungsform der Erfindung sind die Einzelteile im Prallabscheider hängend angeordnet und weisen an ihrem oberen Ende jeweils eine Aufhängeöse und eine Abdichtfläche gegenüber der Decke des Prallabscheiders auf.

Durch die erfindungsgemäße Maßnahme ist es möglich, im Reparaturfalle die verschlissenen Einzelteile schnell auszuwechseln, so daß nur ein kurzer Betriebsstillstand stattfindet. Es ist jedoch auch möglich, das Auswechseln der verschlissenen gegen neue Einzelteile während des Betriebes vorzunehmen, wobei dann für die kurze Dauer dieses Auswechselns eine geringfügige Verschlechterung der Staubabscheidung in Kauf genommen werden muß. Das Auswechseln selbst kann bei der bevorzugten Ausführungsform der Erfindung durch geeignete Hebevorrichtungen erfolgen, die an den Aufhängeösen der Einzelteile angreifen und diese durch in der Abscheiderdecke vorgesehene Schlitze aus dem Prallabscheider herausziehen bzw. in diesen absenken. Die Abdichtflächen der Einzelteile gegenüber der Decke des Prallabscheiders, auf der sie im Betriebszustand aufliegen, sind hierbei in geeigneter Weise so auszubilden, daß ein Entweichen von Gasen in diesem Bereich vermieden wird.

Die Einzelteile, aus der sich die Prallplatte zusammensetzt, können nebeneinander angeordnet sein und sich gegebenenfalls auch überlappen. Es ist stattdessen aber auch möglich, die Einzelteile hintereinander seitlich versetzt anzuordnen. Bei beiden Ausführungsformen kann der Entstaubungsgrad durch teilweises oder vollständiges Herausnehmen von Einzelteilen reguliert werden. Dies kann insbesondere bei Kokstrockenkühlanlagen zur Vermeidung von Wärmeverlusten durch nicht zur Dampferzeugung zur Verfügung stehenden Staub von Bedeutung sein.

Die Erfindung ist in der Zeichnung beispielsweise und in vereinfachter Form veranschaulicht. Es zeigt

Fig. 1 einen senkrechten Schnitt durch eine Ausführungsform des erfindungsgemäßen Prallabscheiders,

Fig. 2 einen Schnitt nach der Linie II-II der Fig. 1,

Fig. 3 einen senkrechten Schnitt durch eine andere Ausführungsform des erfindungsgemäßen Prallabscheiders und

Fig. 4 einen Schnitt nach der Linie IV-IV der Fig. 3.

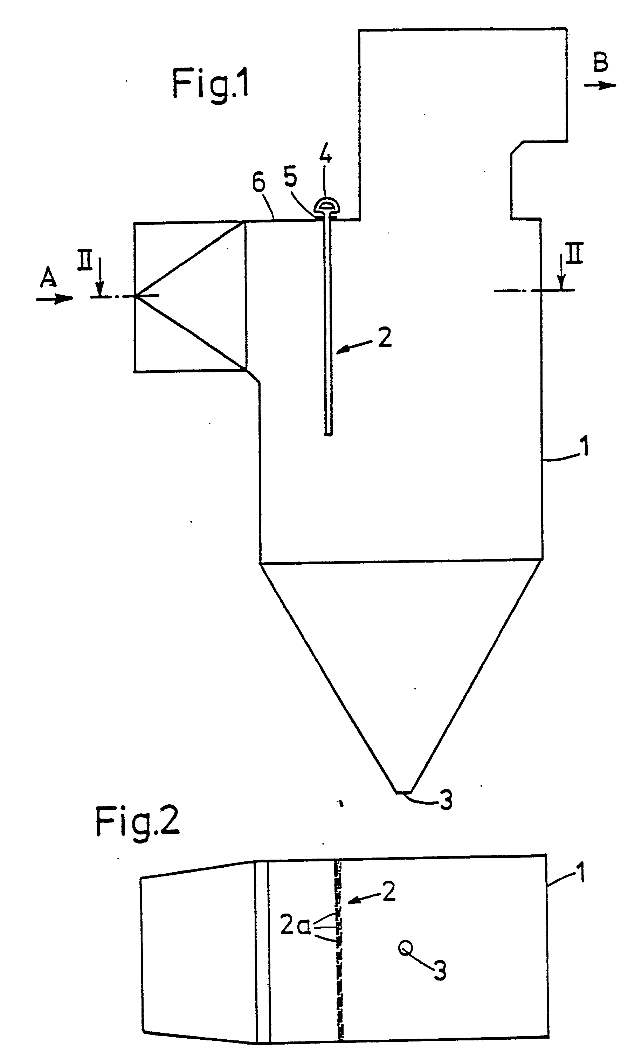

Die zu entstaubenden Gase treten in Richtung des Pfeiles A in den als Ganzes mit 1 bezeichneten Prallabscheider gemäß Fig. 1 und 2 ein. Sie treffen im Prallabscheider auf die Prallplatte 2, an der sie um 90° nach unten umgelenkt werden. An der unteren Begrenzung der Prallplatte werden die Gase erneut umgelenkt, und zwar um 180° nach oben, wobei durch die entstehenden Fliehkräfte die Staubteilchen aus dem Gasstrom ausgeschieden werden. Die Staubteilchen gelangen in den unteren Bereich des Prallabscheiders, aus dem sie durch die Austrageöffnung 3 mittels einer hier nicht dargestellten Abzugsvorrichtung entfernt werden. Die weitgehend entstaubten Gase verlassen den Prallabscheider in Richtung des Pfeiles B.

Die Prallplatte 2 ist erfindungsgemäß aus einer Vielzahl von Einzelteilen 2a zusammengesetzt. Diese sind im vorliegenden Fall nebeneinander und einander überlappend angeordnet. Jedes Einzelteil weist an seinem oberen Ende eine Aufhängeöse 4 auf, mit deren Hilfe es mittels einer geeigneten Hebevorrichtung aus dem Prallabscheider herausgezogen werden kann. Es besitzt ferner eine mit 5 angedeutete Dichtleiste, die auf der Decke 6 des Prallabscheiders aufliegt und eine Abdichtfläche gegenüber dieser aufweist.

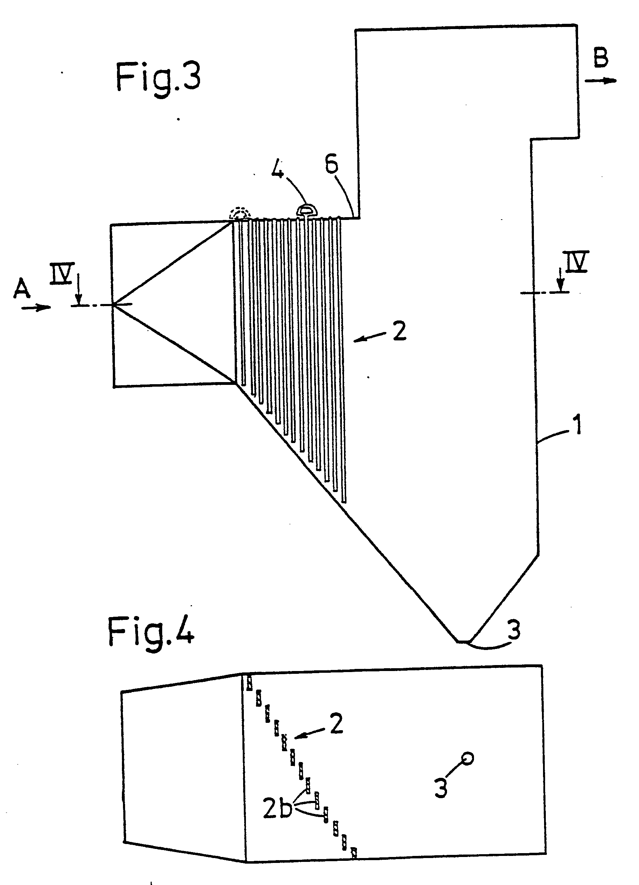

Die Ausführungsform gemäß Fig. 3 und 4 unterscheidet sich von der vorstehend beschriebenen im wesentlichen dadurch, daß die die Prallplatte 2 bildenden Einzelteile 2b seitlich und hintereinander versetzt angeordnet sind. Hierbei wird der Gasstrom in horizontaler Richtung um 90° umgelenkt und durch die Schlitze zwischen den Einzelteilen abgeführt. Nach dem Aufprall der Staubteilchen auf diese Einzelteile fallen diese durch ihre Schwerkraft nach unten, ohne weitere Gasdurchtrittsöffnungen zu passieren. Ein Vorteil dieser Anordnung ist der wesentlich geringere Druckverlust bei hohem Abscheidegrad.

### Patentansprüche

1. Prallabscheider für staubbeladene Gase mit einer von den Gasen angeströmten und diese ablenkenden Prallplatte, dadurch gekennzeichnet, daß die Prallplatte (2) aus mehreren Einzelteilen (2a, 2b) zusammengesetzt ist, die einzeln auswechselbar sind.

2. Prallabscheider nach Anspruch 1, dadurch gekennzeichnet, daß die Einzelteile (2a, 2b) im Prallabscheider (1) hängend angeordnet sind und an ihrem oberen Ende jeweils eine Aufhängeöse (4) und eine Abdichtfläche (5) gegenüber der Decke (6) des Prallabscheiders (1) aufweisen.

3. Prallabscheider nach Anspruch 1 und 2, dadurch gekennzeichnet, daß die Einzelteile (2a) nebeneinander angeordnet sind.

Prallabscheider nach Anspruch 3, dadurch gekennzeichnet, daß die Einzelteile (2a) einander überlappend angeordnet sind.

5. Prallabscheider nach Anspruch 1 und 2, dadurch gekennzeichnet, daß die Einzelteile (2b) hintereinander seitlich versetzt angeordnet sind.

## Claims

1. Baffle-type precipitator for dust-laden gases, with a baffle plate onto which the gases flow, and by which they are deflected, characterised in that the baffle plate (2) is assembled from a plurality of individual, separately replaceable parts (2a, 2b).

2. Baffle-type precipitator according to Claim 1, characterised in that the individual parts (2a, 2b) are installed by suspending them in the baffle-type precipitator (1), and that each part possesses, at its upper end, a suspension eye (4) and a surface (5) which forms a seal facing the ceiling (6) of the baffle-type precipitator (1).

3. Baffle-type precipitator according to Claims 1 and 2, characterised in that the individual parts (2a) are arranged one beside another.

4. Baffle-type precipitator according to Claim 3, characterised in that the individual parts (2a) are arranged so that they overlap one another.

5. Baffle-type precipitator according to Claims 1 and 2, characterised in that the individual parts (2b) are arranged so that they are staggered, laterally and one behind another.

## Revendications

1. Séparateur à impact pour gaz chargés de poussière, comportant une plaque d'impact atteinte par les gaz et déviant ceux-ci, caractérisé par le fait que la plaque d'impact (2) est composée de plusieurs parties (2a, 2b) qui peuvent être changées individuellement.

2. Séparateur à impact selon la revendication 1, caractérisé par le fait que les différentes parties (2a, 2b) sont disposées de façon suspendue dans le séparateur à impact (1) et qu'elles présentent chacune, à leur extrémité supérieure, un oeillet de suspension (4) et une surface d'étanchéité (5) vis-à-vis du toit (6) du séparateur à impact (1).

3. Séparateur à impact selon la revendications 1 et 2, caractérisé par le fait que les différentes parties (2a) sont disposées côte.

4. Séparateur à impact selon la revendication 3, caractérisé par le fait que les différentes parties (2a) sont disposées avec chevauchement entre elles.

5. Séparateur à impact selon la revendication 1 et 2, caractérisé par le fait que les différentes parties (2b) sont disposées avec décalage latéralement et l'une derrière l'autre.

0 058 310

Fig.1

Fig.2

# Fig.3

# Fig.4